# EUROPEAN PATENT SPECIFICATION

(11) **EP 3 101 411 B1**
(45) Date of publication and mention of the grant of the patent: **06.09.2023**
(21) Application number: 16172305.1
(22) Date of filing: 31.05.2016
(51) Int. Cl.: G01N 17/02, C23F 13/06

(54) **PERMANENT REFERENCE ELECTRODE FOR THE POTENTIAL MEASUREMENT OF BURIED METALLIC STRUCTURES**
PERMANENTE BEZUGSELEKTRODE ZUR POTENTIALMESSUNG VON VERGRABENEN METALLISCHEN STRUKTUREN
ÉLECTRODE DE RÉFÉRENCE PERMANENT POUR LA MESURE DE POTENTIEL DE STRUCTURES MÉTALLIQUES ENFOUIES

(30) Priority: 05.06.2015 IT UB20151318
(43) Date of publication of application: 07.12.2016
(73) Proprietor: CESCOR S.r.l., 20134 Milano (IT)
(72) Inventor: BAZZONI, Bruno, 20134 MILANO (IT); GINOCCHIO, Monica, 20134 MILANO (IT); MARCASSOLI, Paolo, 20134 MILANO (IT)
(74) Representative: Bianchetti & Minoja with Trevisan & Cuonzo IPS SRL

(56) References cited:
- WO-A1-03/027356
- WO-A1-2013/149300
- WO-A2-2006/043113
- CH-A5- 680 022
- US-A- 5 712 559
- A Brenna ET AL: "Prove di laboratorio su sonda di potenziale con elettrodo di zinco per il telecontrollo della protezione catodica", , 1 May 2010 (2010-05-01), pages 13-19, XP055247964, Retrieved from the Internet: URL:http://scholar.google.com/scholar_url? url=http%3A%2F%2Fwww.fracturae.com%2Findex .php%2Faim%2Farticle%2Fdownload%2F348%2F31 8&hl=en&sa=T&oi=gga&ct=gga&cd=0&ei=JbG0Vv_ cFI-lmAGPhIDADA&scisig=AAGBfm3kXhBMk0IbLdn tsgDfEPnXeRYmVg&nossl=1&ws=2560x1313 [retrieved on 2016-02-05]

## Description

### Invention Field

The present invention concerns the general sector of cathodic protection of buried metallic structures, such as gas and hydrocarbons or water pipelines, or tanks bottoms and also other kinds of buried structures, in particular the same document has as its object a new and useful zinc reference electrode, which can be buried in a permanent way in the ground, useful to measure over the time the electrochemical potential of buried metallic structures for the purpose of monitoring their protection state from corrosion or free corrosion.

### State of the prior art:

It is technically well known to protect steel buried structures and to prevent their corrosion in the ground throughout the so called cathodic protection, which is generally used, as a matter of fact, in combination with the application of organic coatings on buried structures.

This cathodic protection technique of buried structures can be carried out and implemented through various ways and systems, and it is preferentially made according to the so called impressed current systems or with galvanic anodes, generally made of magnesium or zinc.

In any case, independently from the specific type of cathodic protection system adopted, (impressed current or with galvanic anodes) the cathodic protection system usually includes a cathodic protection monitoring system constituted by one or more permanent reference electrodes, namely buried and installed permanently in the ground in the proximity of the buried structures whereby the necessary potential measurements are taken in order to verify over the time the state of correct protection of the same buried structure.

In case of oil and gas transportation pipelines structures for example, the electrodes are positioned and distributed, once buried, along the underground stream of the pipeline, approximately every 500 or 1000 m, and they are connected through an electrical cable to a test post or junction box to which is also connected a cable linked to the structure, in order to carry out the potential measurement of buried structures to protect.

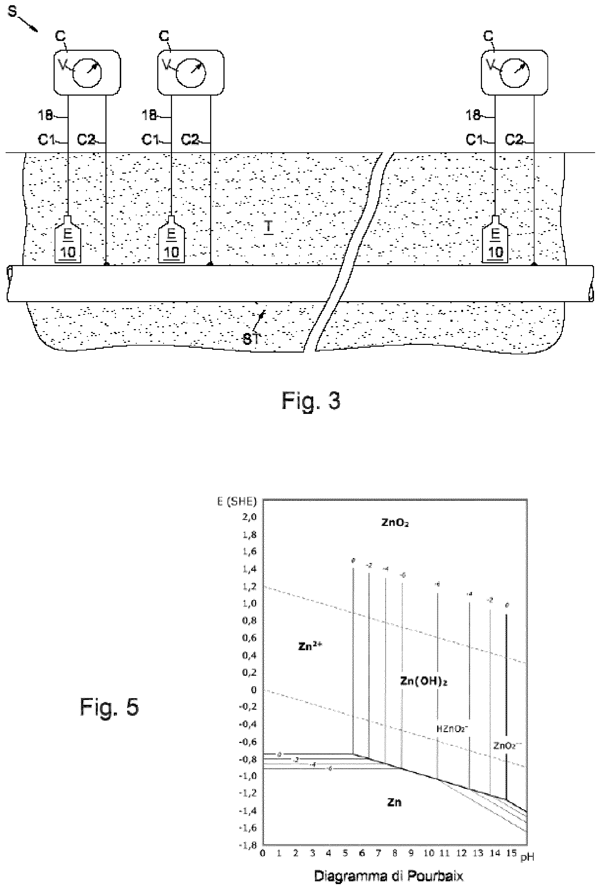

For the sake of clarity, the scheme reported in Fig. 3 shows the essential parts of a common cathodic protection monitoring system, indicated through the letter S, and including several permanent electrodes E, buried in the ground T, which are located in the proximity and along the buried metallic structure ST that has to be protected, which runs underground and can be constituted by a pipeline where each of these electrodes E is electrically connected with its respective cable C1 to a case C to which also another cable C" is linked, coming from the buried structure ST to protect, in order to allow the measurement, for example, through a voltmeter V or an instrument both housed in the case C, the structure ST potential compared with the permanent electrodes E.

The cathodic protection and monitoring system could, depending on the case, include devices for automatic potential measurements, for remote transmission of measured data (telemetry), and also for automatic adjustment of electrical supply systems (remote control).

Permanent reference electrodes are characterized, especially when compared to other portable electrodes made to be moved from one soil area to the other, by some specific characteristics and peculiarities together with stability over time of their potential and with a greater durability of the device in the environment of exposure, be it soil, seawater, concrete or more.

It is also requested to be negligible the release of chemical species which might be dangerous for the environment as well as for the same structure to be protected.

The most common reference electrode for in-soil applications is the saturated copper/copper-sulphate (also indicated with the CSE symbol Copper Sulphate Electrode), available in different types, both in portable and permanent version.

The version commonly used during the permanent installation consists of a terracotta case where a little copper rod is inserted and which is then filled with copper sulphate crystals, attracting the ground humidity, functioning as electrolyte.

The main limit of such a permanent CSE electrode, is its limited service life due to soil washing-out, that makes the soil water determine the progressive dissolution and dispersion of copper sulphate in soil, making the average expectance of copper-sulphate electrode just of a few years.

Furthermore, soil washing-out influences negatively on the electrode functioning and it implies some negative effects, for example the following:
- dispersion of metal ions Cu^{2 +} in the environment;
- accumulation in the vicinity of the structure of cupric ions, which constitute a potentially corrosive chemical species for steel.
Another known type of permanent reference electrode is the one made of zinc. In fact, this permanent zinc reference electrode is a so-called pseudo-reference electrode, being its potential determined not by a specific electrode reaction, but rather by the corrosion reaction into the environment of exposure.

In particular, in neutral and acid environments, the mixed potential of zinc is determined by the anodic semi-reaction: Zn²⁺ + 2e⁻ = Zn, whose equilibrium potential E°, is equal to -0.762 V versus a SHE type electrode (Standard Hydrogen Electrode).

Instead, in neutral - alkaline environments with a pH higher than 8÷9, zinc gives rise to the formation of hydroxide, Zn(OH)₂, while in alkaline environments soluble complexes are formed, galvanized HZnO₂- and ZnO₂--, as indicated by the Pourbaix diagram of zinc, shown in Fig. 5 with the drawings.

In a neutral environment, the mixed potential of zinc can be calculated considering the exchange rate of the anodic semi-reaction of zinc oxidation, the concentration of oxygen dissolved in the water present in the environment in contact with metallic zinc, the pH and the concentration of ions Zn²⁺, fixed equal to 10⁻⁶ eqs/l.

In this case the mixed potential is equal to -1.065 V compared to the reference electrode of the copper-sulphate of saturated copper type CSE, in aired environments as for the seawater, it results slightly more negative, equal to -1.070 V, in little aired environments.

The zinc reference electrode is useful, nowadays, for a typical application as permanent device in the cathodic protection of structures submersed in seawater, where it is used, for instance, as a fixed electrode in the monitoring systems of oil platforms.

In seawater applications, the zinc electrode is characterized by an elevated sturdiness, facility of various geometry realizations, elevated stability over time.

The correct functioning of zinc as a reference electrode in seawater is due to the activity conditions that occur on the electrode surface, favoured by the elevated concentration of chloride ions in seawater.

Vice versa, in sweet water or in the ground, zinc is not, as a matter of fact, applicable due to the tendency to passivate itself.

Indeed, the passivation produces an increase of free corrosion potential value that makes zinc unusable as a reference electrode.

A technique commonly used also for maintaining zinc active over time even in the ground consists of placing it in work in contact with a material used for filling, often indicated with the English term "backfill", usually made with a gypsum and bentonite base, where the sulphate ions, SO₄²⁻ act favouring conditions of activity of zinc.

In this configuration, the zinc reference electrodes are constituted by an element of metallic zinc connected to an electric cable and manufactured with a cotton bag filled with gypsum and bentonite, both powdered.

Also in this case, however, as it has already been verified for the electrode of copper/copper - sulphate, the duration of the zinc electrode results as very limited because of the washing out, in time, of the activating species and substances that are contained in the backfill. In practice, in the ground the electrode passivation of zinc is verified in varying times from a few months up to a maximum of some years.

This limitation, related to the duration, is particularly critical, for example, in the applications of cathodic protection for tanks bottoms installed above ground, where the reference electrodes, buried below the tank bottom, cannot be replaced, in any way, during the operational life of the structure.

An improvement in comparison to the zinc electrode with backfill in bag is described in A. Brenna, L. Lazzari, M. Ormellese, L. Rigozzi "Laboratory Tests on potential probe through zinc electrode for the remote control of cathodic protection", in La Metallurgia Italiana, n. 5, p. 13, 2010.

The device includes a zinc reference electrode in contact with a solid backfill realized starting from a mixture of gypsum, bentonite, polymeric fibre and water. In this device, the sulphate ions of gypsum act as an activating species for zinc and, unlike what happens in the cotton bag type zinc electrode result blocked in the solid backfill.

It is noted that the activating power of the sulphate ion towards the zinc is relatively modest, so, in time, it easily prevails the reaction of zinc with the ions OH⁻ to form hydroxides and eventually zinc's oxides with the final result of making the electrode polarizable.

For completeness, there are also mentioned the following patent documents WO 2006/043113 A2, CH 680 022 A5, WO 2013/149300 A1, US 5 712 559 and WO 03/027356 A1 which disclose embodiments and components concerning the cathodic protection of metallic structures, as in particular of buried pipes and storage tanks.

### Invention Summary

Therefore, a primary object of the present invention is to develop a new permanent zinc reference electrode for cathodic protection of buried metallic structures which exceeds and remedies to the limits of technique, as seen above, and in particular which has a longer service life than the one of permanent saturated copper/copper-sulphate reference electrodes.

A further purpose, related to the previous one, in the present invention is also made to propose a new and innovative zinc permanent reference for the cathodic protection of buried metallic structures, that maintains itself active in the ground for a long period of time, in order to be able to be applied suitably also in those cases in which the electrode, once buried, cannot be removed anymore.

The aforesaid purposes can be considered achieved thanks to the zinc permanent reference electrode, having its characteristics been defined by the independent claim 1 or 3.

Particular forms of realization of the present invention are also defined by their dependent claims.

As illustrated in the following paragraphs, the electrode subject of the invention offers numerous and remarkable advantages and particularly is such to assure an elevated resistance to the zinc passivation, and by doing so, to maintain for very long time stable conditions of activity on the surface of the electrode and therefore to allow the employment of the same as a reference electrode.

### Brief description of the drawings

These and other purposes, characteristics and advantages of the present invention will result clearly and in an evident way from the following description of the preferred embodiment, done by way of a not limited indication with reference to the attached sketches, in which:
Fig. 1 is a schematic view, in longitudinal section, of a first embodiment of a zinc permanent reference electrode, according to the present invention, for the verification of cathodic protection of buried structures;
Fig. 2 is a schematic view, in longitudinal section, of a second embodiment of a zinc permanent reference electrode, according to the present invention, for the verification of cathodic protection of underground structures;
Fig. 3 is a diagram showing the essential parts of a conventional cathodic protection monitoring system, including a plurality of permanent reference electrodes, useful to verify the security conditions of a buried metallic structure consisting, for example, of a pipe which runs underground;
Fig. 4 is a further diagram showing the essential parts of a conventional cathodic protection system of a metallic tank bottom, including a plurality of permanent electrodes and made to verify the security conditions of such buried metallic structure, in which the electrodes can be equipped with a plastic tube for the humidification of the ground surrounding the electrode, and
Fig. 5 shows the classic zinc Pourbaix diagram of which the permanent reference electrode of the present invention is made.

### Description of some preferred embodiments of the invention

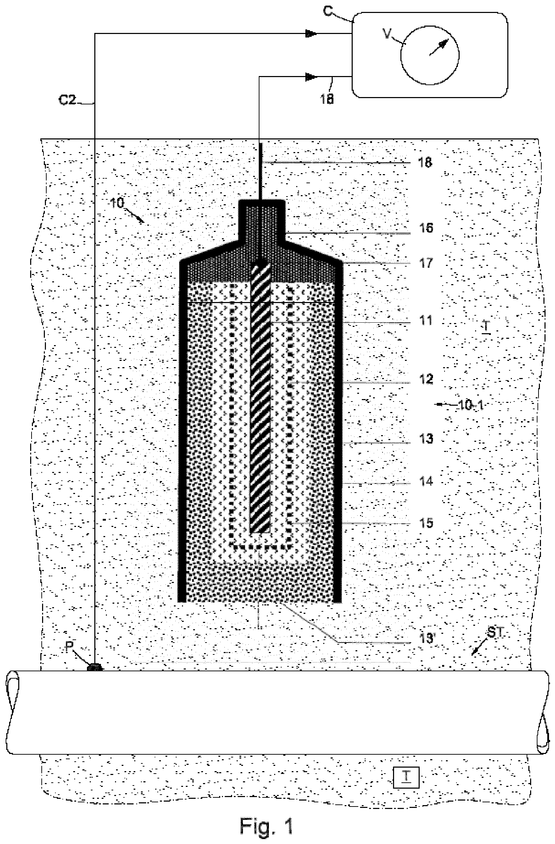

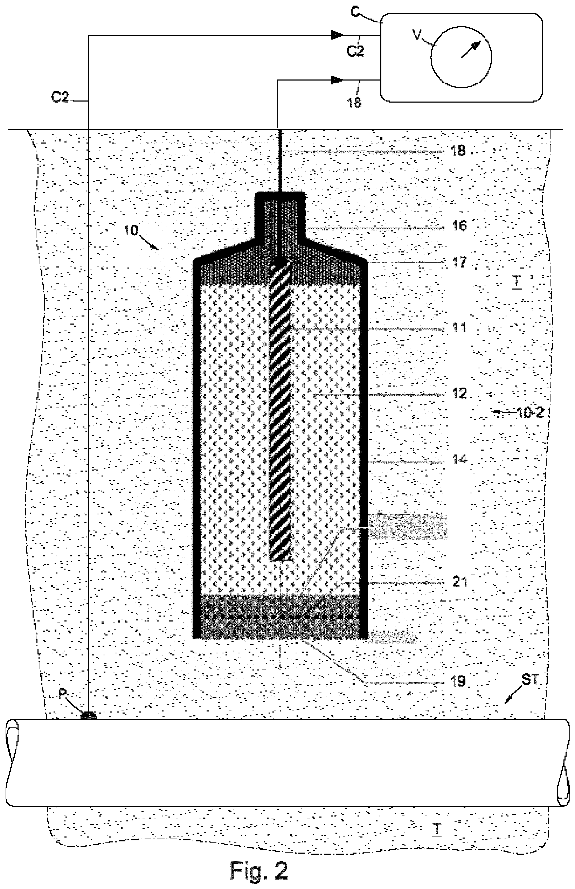

With reference to the drawings and in particular, to the respective Figs. 1 and 2, a reference electrode, of the permanent type or predicted to be buried in a permanent manner in the ground, according to the present invention, for cathodic protection of buried metallic structures, is indicated in its whole, with 10.

Fig. 1 shows schematically in section a first preferred embodiment, indicated with 10-1, of the permanent reference electrode 10 of the present invention.

In detail, according to this first embodiment, the reference electrode 10-1 includes:
- a zinc element or electrode 11, also called zinc electrode element, characterized by an elevated purity and exhibiting, for instance, a lengthened cylindrical linear form or a form that includes a wire coiled in a spiral shape
- a solid special filling material 12 or backfill, made of gypsum, bentonite, cellulose fibre, sodium chloride and water, that contains to its inside the zinc electrode 11;
- a containment body 13 surrounding the backfill 12 and realized with cementitious mortar 13' enriched by chloride ions; and
- an external element or case 14, in plastic material, which covers externally the containment body 13 made of cementitious mortar 13' and work as a container of various parts of the reference electrode 10-1.

The zinc electrode 11, located inside the backfill 12, is sealed on its upper side, through a resin 16, with the external element 14 acting as a container of the reference electrode 10-1, and connected to a superior extremity, to a point indicated with 17 in Fig. 1, to a monopolar electric cable 18 that extends itself externally to the reference electrode 10-1.

Furthermore, the external element 14 is closed in its superior side and open in the lower zone of the electrode 10-1 in order to leave uncovered in such zone, the body of containment 13.

Therefore, the reference electrode 10-1 presented in this invention has a configuration where the zinc element or electrode is in contact and inserted inside a solid electrolyte body which presents hygroscopic properties and a high content of chloride ions, which, as it is well known from zinc applications in seawater, prevent the passivation of such material.

In particular, the cementitious body 13, surrounding and containing the backfill 12, holds back the water in the microporosities of the cementitious structure, it furnishes a reserve of chloride ions and it contributes, furthermore, to give sturdiness and a long duration to the same electrode 10-1.

As previously stated, the zinc electrode element 11 must have an elevated purity (Zn > 99% weight), with an iron content below 0.0014% by weight, of copper below 0.003% by weight and lead below 0.002% by weight, in particular also in accordance with the ASTM-B-418 "Standard Specification for Cast and Wrought Galvanic Zinc Anodes" or with the U.S. MIL-A-18001K.

The composition of the backfill 12, essential part of the reference electrode 10-1, was in its turn defined and set up so as to present the following characteristics:
- neutrality conditions,
- solid consistency,
- hygroscopic behaviour,
- Ionic conductivity and presence of chemical species activating for zinc, such as sulphate ions and specifically chlorides.

The addition, in comparison to the composition described in Brenna et al., of chloride ions in the mix of the backfill represents the most meaningful innovation of the invention. The chloride ions have, indeed, through the theory of wet corrosion processes, play an important and very specific role in making unstable the passivation films of several metallic materials that lead an active-passive behaviour. Also in the case of zinc, the presence of chloride ions, as well as shown by the active behaviour of zinc in sea water, opposes itself to the zinc hydroxides and oxides formation and to the consequent raising of the free corrosion potential of zinc itself.

It is also expected the addition in the backfill of a small quantity of zinc chloride, ZnCl₂ in order to further stabilize, through the presence of a defined concentration of Zn²⁺ ions in solution, the potential of couple Zn/Zn²⁺.

A typical composition for the backfill 12 included in the electrode 10-1 is reported in the following table:

| **Component** | **Percentage by mass** |
|---|---|
| Gypsum | 40 ÷ 50 |
| Bentonite | 10 ÷ 15 |
| Cellulose Fibre | 2 ÷ 4 |
| Water | 30 ÷ 40 |
| NaCl | 2 ÷ 10 |
| ZnCl₂ | < 1 |

Cementitious mortar 13' of containment body 13 has been defined in order to be appropriate to work both as a container of the zinc electrode 11 and backfill 12 and also as a reservoir of chloride ions.

According to the first type of embodiment as defined by independent claim 1 the composition for the above mentioned cementitious mortar 13 is reported in the following table:

| **Component** | **Percentage by mass** |
|---|---|
| Sand | 50 ÷ 70 |
| Concrete | 15 ÷ 25 |
| Water | 10 ÷ 15 |
| NaCl | 1 ÷ 5 |

In the upgraded version, illustrated in Fig.1 of the electrode 10-1, a polymer membrane 15, with properties of ion exchange, can be located, in the backfill 12 between the zinc electrode element 11 and the case 13 made by cementitious mortar 13'. This way, any risk of contact between the zinc electrode element 11 and the case 13 made by cementitious mortar 13' is avoided, with the consequent zinc potential shifting to more negative values for the effect reached with the pH increase (see Fig. 5).

In its use, as shown in Fig. 1, the reference electrode 10-1 is buried in the ground T adjacent to the metallic structure ST, buried, under cathodic protection, for which the cementitious mortar 13', constituting the body of containment 13 of the reference electrode 10-1, in its turn stabilizes and realizes, in the lower part of the reference electrode 10-1 left uncovered by the external element 14, the electrolyte contact with the ground T where the reference electrode 10-1 is buried in the proximities of metallic structure ST.

Moreover, the monopolar cable 18, connected at one of its extremities to the zinc electrode 1 of the reference electrode 10-1, is connected on the other extremity to a test post (or junction box), C to which is also connected a cable C2 connected at a certain point P with the structure ST, buried, under cathodic protection.

In this configuration, it is possible the measuring and monitoring, through a voltmeter V located at the junction box / test post C connected to the same, the potential of metallic structure ST and therefore the conditions of cathodic protection in the area of the same metallic structure ST, buried, adjacent to the reference electrode 10-1, also buried in the ground T.

Fig. 2 shows a second type of embodiment, indicated as 10-2, of the permanent reference electrode 10 of this invention.

Specifically, on the basis of this second embodiment, the reference electrode 10-2 includes:
- a zinc element or electrode 11, also called electrode element of zinc, characterized by an elevated purity and exhibiting, for example, a cylindrical elongated form or as a wire coiled in a spiral shape.
- a special solid filling material, or backfill 12, made of gypsum, bentonite, cellulose fibre, sodium chloride and water, which surrounds and contains to its inside the zinc electrode 11; and
- an external element or case 14, made in plastic material, filled with the backfill material 12 and works as a container of the electrode 10-2.

Consequently, in this second form of realization 10-2 of the electrode of the invention, it is absent, in comparison to the first form of the same 10-1, the cementitious mortar body that contains the zinc electrode.

The electrode 10-2 is closed below, in an area that has been left uncovered by the external element 14 and comes into contact with the ground T, with a porous membrane 19, also called porous baffle, made to ensure the electrolytic continuity between the environment (ground T), and the electrode backfill 10-2.

In the detail, this porous membrane 19 can be realized with wood, or ceramics or other porous materials chosen to realize and to establish the electrolyte contact with the ground T.

Furthermore, in the electrode 10-2 likewise the electrode 10-1, the zinc electrode 11, located inside the backfill 12, is sealed on its upper side, through a resin 16, with the external element 14 acting as a container of the reference electrode 10-2, and connected to a superior extremity, to a point indicated with 17 in Fig. 2, to a monopolar electric cable 18 that externally extends itself to the reference electrode 10-2. And likewise to the electrode 10-1, the chlorides develop the specific role of activating zinc, a role considered indelible for the zinc stability term and for its functionality as a reference electrode.

In an improved version of the electrode 10-2, a polymeric membrane 21 with characteristics of ionic exchange can be drowned in the porous membrane 19, or it can be located among the porous membrane 19 and the backfill 12 with the purpose of conferring to the electrode 10-2 both the opportune characteristics of hygroscopicity and the ability to protect the backfill 12 from possible contaminations that could alter its pH or its composition.

According to the invention in the second type of embodiment an addition in the backfill of a small quantity of zinc chloride, ZnCl₂ is foreseen to further stabilize, through the presence of a defined concentration of Zn²⁺ ions in solution, the potential of couple Zn/Zn²⁺.
For a better understanding and appreciation of the invention and its characteristics, some examples of application and tests performed on the new permanent zinc electrode, subject of the invention, will be described in the following pages:

### Example 1.

In accordance with the first form of realization, as illustrated before, some batches of electrodes have been made.

The following tables report compositions adopted respectively for the cementitious mortar and the backfill:
Cementitious mortar composition:

| **Component** | **Quantity** |
|---|---|
| Sand | 828 g |
| Cement | 276 g |
| Water | 166 g |
| NaCl | 16.6 g |

Backfill composition:

| **Component** | **Quantity** |
|---|---|
| Gypsum | 400 g |
| Bentonite | 10g |
| Cellulose Fibre | 24.8 g |
| Water | 250 g |
| NaCl | 25 g |
| ZnCl₂ | - |

Among the prototypes of electrodes produced, a large sample of No. 48 electrodes has been extracted, on such sample periodic potential measurements have been carried out for a period of two months, keeping the electrodes immersed in moist sand.

The average value of the potential measurements carried out on this sample of electrodes was -1.063 V compared to a measurement made on an electrode of saturated copper/copper-sulphate type of (SCE), with an average standard deviation equal to 0.089 V.

### Example n. 2.

Not in accordance with the second realization type 10-2, previously illustrated without a cementitious mortar body and with backfill only, some batches of electrodes have been made featuring a backfill prepared in accordance with the quantities indicated in the following table:

| **Component** | **Quantity** |
|---|---|
| Gypsum | 200 g |
| Bentonite | 50 g |
| Cellulose Fibre | 12.4 g |
| Water | 200 g |
| NaCl | 40 g |
| ZnCl₂ | - |

The porous membrane instead, has been made with argillite.

From this lot of prototypes a sample of N. 30 electrodes was extracted, on each of these, periodic potential measurements have been carried out for a duration of one year, while maintaining the electrodes in moist sand.

The average value of the potential measurements made on this sample was of -1.108 V with compared to a measurement made on an electrode of the copper-saturated copper sulphate type (SCE), with an average standard deviation equal to 0.014 V, to indicate a very low scattering of the potential values.

After a year of immersion in moist sand, the average value of the potential measurements for the 30 electrodes was -1.073 V, and so next to the expected theoretical value, compared to the measurement made with a SCE electrode, with a standard deviation of 0.007 V.

Therefore, the results that were obtained from the realization of these prototypes and from experiments conducted with them have clearly demonstrated that the permanent zinc electrodes, in accordance with the present invention, in the respective embodiments described above, show functioning stability features and stability for the potential measurement in time, and they are, therefore, absolutely adequate and suitable for industrial uses in which they are intended, for the cathodic protection industry.

For completeness, Fig. 3, already mentioned above, schematically shows a typical example of application of a plurality of reference electrodes 10, in accordance with the present invention, to measure and monitor over time the potential of a buried metallic structure ST, consisting for example of a metallic pipeline laid underground, in order to verify its corrosion or cathodic protection state.

As can be seen from Fig. 3, the reference electrodes 10 are suitably buried, one after the other, in various points of the ground T adjacent the pipeline ST to be protected, in order to follow the path below ground, and each is connected electrically via an electrical cable 18 with a central test post C, to which an electrical wire C2 is also connected and which belongs with the buried metallic structure ST, under cathodic protection.

Therefore, thanks to this configuration, it is possible to perform the measurement, through the test post C, of the electrical potential of each area of the metallic structure ST, namely the pipeline, buried, disposed adjacent to a corresponding buried reference electrode 10.

Of course, several other applications are possible, in particular as a function of the conformation of the buried metallic structure under cathodic protection, of which the electrochemical potential has to be measured, in which these applications may include a variable number of reference electrodes 10.

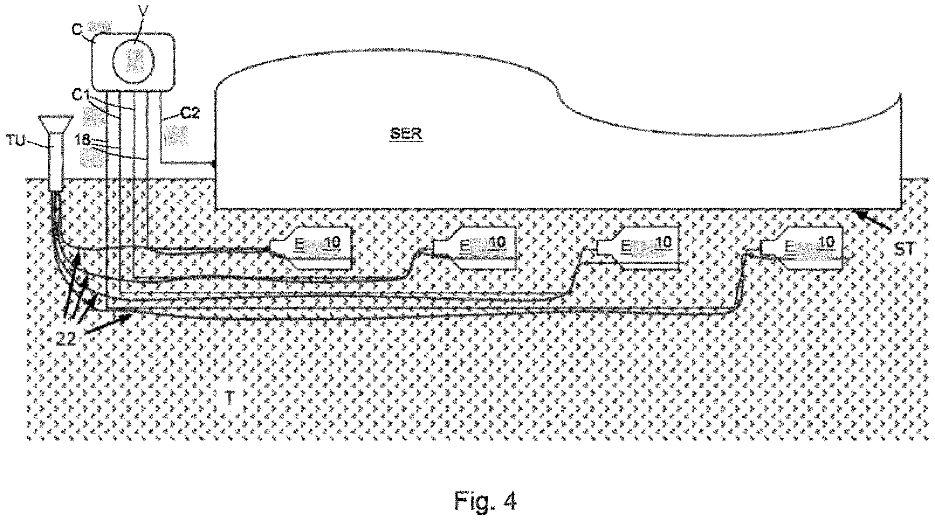

A further example of application is shown in Fig. 4, where the cathodic protection system is applied in relation to a metallic tank SER disposed above ground and is controlled by a plurality of permanent reference electrodes 10, in accordance to the invention, installed below the tank itself.

As for the example of the application shown in Fig. 3, it is possible to measure the potential of the tank bottom, and by doing so, to verify the proper protection conditions, through the potential measurements made with respect to various reference electrodes.

The example illustrated in Fig. 4 is characterized by the almost complete impossibility of replacing the reference electrodes in the event of their malfunction and then by the necessity to dispose of durable permanent electrodes such as the zinc electrodes 10, having the special configuration subject of the present invention.

To facilitate the measurement, each electrode 10 can be equipped with a small tube of plastic material, indicated with 22, fixed to the electrical cable 18, through which it is possible to irrigate with water the soil surrounding the electrode 10, as schematically shown in Fig. 4 with a tube TU planted into the ground T that serves as an irrigation water supply manifold for all the tubes 22, so as to increase the electrical conductivity and allow the acquisition of stable potential measurements.

It is then clear, given the detailed description, that the new zinc permanent reference electrode reported in the invention, applicable for the cathodic protection of buried metallic structures, meets its full objectives and in particular it can be distinguished by other traditional and well-known reference electrodes for a realization which ensure both the duration and the stability of the electrode potential for a long period.

## Claims

1. Permanent reference electrode (10, 10-1), for use with a box (C) housing a voltmeter (V) for measuring the potential of buried metal structures (ST) to be protected, comprising:
- a zinc electrode (11), having an elongated shape;
- a backfill (12), with a base of gypsum, bentonite, cellulose fibres, and water, which encloses in its interior said zinc electrode (11); and
- an external casing (14) which covers externally the permanent reference electrode (10-1) and acts as container of its parts;
the permanent reference electrode (10, 10-1) being **characterized in that** said backfill (12), enclosing in its interior said zinc electrode (11), comprises sodium chloride so as to prevent passivation of the zinc material of the electrode (11), and
**in that** the permanent reference electrode (10, 10-1) further comprises a containment body (13) containing the backfill (12) and covered by the external casing (14),
wherein said containment body (13) is made with a cement mortar (13') consisting of 50-70 % by weight of sand, 15-25% by weight of concrete, 10-15% by weight of water and 1-5% by weight of NaCl and the cement mortar (13') of said containment body (13) exhibits a zone which is left uncovered by the external casing (14).

2. Permanent reference electrode (10, 10-1) according to claim 1, comprising further a polymeric membrane (15), with features of ion exchange, interposed, in the backfill (12), between the electrodic element in zinc (11) and the containment body (13) in cement mortar (13').

3. Permanent reference electrode (10, 10-2), for use with a box (C) housing a voltmeter (V) for measuring the potential of buried metal structures (ST) to be protected, comprising:
- a zinc electrode (11), having an elongated shape;
- a backfill (12), with a base of gypsum, bentonite, cellulose fibres, and water, which encloses in its interior said zinc electrode (11); and
- an external casing (14), which covers externally the permanent reference electrode (10-2), is filled with said backfill (12), and acts as container of the parts of the permanent reference electrode (10-2);
the permanent reference electrode (10, 10-2) being **characterized in that** said backfill (12), enclosing in its interior said zinc electrode (11), comprises also sodium chloride and zinc chloride so as to prevent passivation of the zinc material of the electrode (11),
**in that** said external casing (14) has an elongated tubular shape which extends around and along said zinc electrode and the respective elongated shape; and
**in that** the permanent reference electrode (10, 10-2) further comprises a porous baffle or membrane (19) which closes below the permanent reference electrode (10-2) in an area which is left uncovered by said external casing (14) at an open end of the respective elongated tubular shape,
wherein said porous baffle or membrane (19) is adapted to cooperate, along all its extension and without the interposition of any additional element, with the ground (T) where the reference electrode (10, 10-2) is buried in the proximities of the metallic structure (ST) to be protected, so as to assure the electrolytic continuity between the ground (T) and said backfill (12) filling the external casing (14).

4. Permanent reference electrode (10, 10-2) according to claim 3, comprising further a polymeric membrane (21), with features of ion exchange, embedded in the porous baffle (19) or interposed between the porous baffle (19) and the backfill (12).

5. Permanent reference electrode (10, 10-1; 10-2) according to claim 3 or 4, wherein said porous baffle (19) is made of argillite.

6. Permanent reference electrode (10, 10-1; 10-2) according to claim 1 or any one of the preceding claims when dependent on claim 1, wherein the backfill contains a quantity of zinc chloride for stabilising the potential of the zinc electrode.

7. Permanent reference electrode (10, 10-1; 10-2) according to any one of the preceding claims, wherein said zinc electrode (11) is sealed in a respective upper zone, by means of a resin (16), with said external element (14) acting as container of the permanent reference electrode (10, 10-1; 10-2), and is connected at a respective upper end (17) to said box (C) through an electric cable (18), so as to allow the measuring, by means of the voltmeter (V) housed in said box (C), of the electrical potential of the metal structure (ST), buried, to be protected.

8. Permanent reference electrode (10, 10-1; 10-2) according to any one of the preceding claims, wherein the respective external casing or element (14), acting as container, is in plastic material.

9. Permanent reference electrode (10, 10-1; 10-2) according to any one of claims 1 or 3, wherein said zinc electrode (11) is connected to said box (C) through a cable (18) of the monopolar type, so as to allow to measure, by means of the voltmeter (V) housed in the box (C), the electrical potential of the buried metal structure (ST).

10. System (S) for the cathodic protection of a metal structure (ST), buried, comprising one or more permanent reference electrodes (10) according to any one of the preceding claims, wherein said one or more permanent reference electrodes (10) are buried in the vicinity of the buried metal structure (ST) to be protected, so as to allow the measurement and the monitoring of the potential at different points and zones of the buried metal structure (ST) to be protected.

## Patentansprüche

1. Permanente Referenzelektrode (10, 10-1) zur Verwendung mit einem Kasten (C), der ein Voltmeter (V) zur Messung des Potentials von zu schützenden vergrabenen Metallstrukturen (ST) aufnimmt, umfassend:
eine Zinkelektrode (11), die eine längliche Form hat;
eine Verfüllung (12) auf der Basis von Gips, Bentonit, Zellulosefasern und Wasser, die in ihrem Inneren die Zinkelektrode (11) umschließt; und
ein Außengehäuse (14), das die permanente Referenzelektrode (10-1) von außen abdeckt und als Behälter für ihre Teile dient;
wobei die permanente Referenzelektrode (10, 10-1) **dadurch gekennzeichnet ist, dass** die Verfüllung (12), die in ihrem Inneren die Zinkelektrode (11) umschließt, Natriumchlorid umfasst, um eine Passivierung des Zinkmaterials der Elektrode (11) zu verhindern, und
dass die permanente Referenzelektrode (10, 10-1) darüber hinaus einen Einschlusskörper (13) umfasst, der die Verfüllung (12) enthält und von dem Außengehäuse (14) abgedeckt ist,
wobei der Einschlusskörper (13) mit einem Zementmörtel (13') hergestellt ist, der aus 50-70 Gewichtsprozent Sand, 15-25 Gewichtsprozent Beton, 10-15 Gewichtsprozent Wasser und 1-5 Gewichtsprozent NaCl besteht, und wobei der Zementmörtel (13') des Einschlusskörpers (13) eine Zone aufweist, die von dem Außengehäuse (14) unbedeckt bleibt.

2. Permanente Referenzelektrode (10, 10-1) nach Anspruch 1, die darüber hinaus eine Polymermembran (15) mit Merkmalen eines Ionenaustauschs umfasst, die in der Verfüllung (12) zwischen dem Zinkelektrodenelement (11) und dem Einschlusskörper (13) aus Zementmörtel (13') angeordnet ist.

3. Permanente Referenzelektrode (10, 10-2) zur Verwendung mit einem Kasten (C), der ein Voltmeter (V) zur Messung des Potentials von zu schützenden vergrabenen Metallstrukturen (ST) aufnimmt, umfassend:
eine Zinkelektrode (11), die eine längliche Form hat;
eine Verfüllung (12) auf der Basis von Gips, Bentonit, Zellulosefasern und Wasser, die in ihrem Inneren die Zinkelektrode (11) umschließt; und
ein Außengehäuse (14), das die permanente Referenzelektrode (10-2) von außen abdeckt, mit der Verfüllung (12) gefüllt ist und als Behälter für die Teile der permanenten Referenzelektrode (10-2) dient;
wobei die permanente Referenzelektrode (10, 10-2) **dadurch gekennzeichnet ist, dass** die Verfüllung (12), die in ihrem Inneren die Zinkelektrode (11) umschließt, auch Natriumchlorid und Zinkchlorid umfasst, um eine Passivierung des Zinkmaterials der Elektrode (11) zu verhindern,
dass das Außengehäuse (14) eine längliche röhrenförmige Form aufweist, die sich um die Zinkelektrode und die jeweilige längliche Form herum und entlang dieser erstreckt; und
dass die permanente Referenzelektrode (10, 10-2) darüber hinaus eine poröse Trennwand oder Membran (19) umfasst, die unterhalb der permanenten Referenzelektrode (10-2) in einem Bereich abschließt, der von dem Außengehäuse (14) an einem offenen Ende der jeweiligen länglichen röhrenförmigen Form unbedeckt bleibt,
wobei die poröse Trennwand oder Membran (19) ausgestaltet ist, um über ihre gesamte Ausdehnung und ohne Zwischenschaltung eines zusätzlichen Elements mit dem Boden (T) zusammenzuwirken, wobei die Referenzelektrode (10, 10-2) in der Nähe der zu schützenden Metallstruktur (ST) eingegraben ist, um die elektrolytische Kontinuität zwischen dem Boden (T) und der das Außengehäuse (14) füllenden Verfüllung (12) zu gewährleisten.

4. Permanente Referenzelektrode (10, 10-2) nach Anspruch 3, die darüber hinaus eine Polymermembran (21) mit Merkmalen eines Ionenaustauschs umfasst, die in die poröse Trennwand (19) eingebettet oder zwischen der porösen Trennwand (19) und der Verfüllung (12) angeordnet ist.

5. Permanente Referenzelektrode (10, 10-1; 10-2) nach Anspruch 3 oder 4, wobei die poröse Trennwand (19) aus Argillit hergestellt ist.

6. Permanente Referenzelektrode (10, 10-1; 10-2) nach Anspruch 1 oder nach einem der vorhergehenden Ansprüche, wenn er von Anspruch 1 abhängt, wobei die Verfüllung eine Menge an Zinkchlorid zur Stabilisierung des Potentials der Zinkelektrode enthält.

7. Permanente Referenzelektrode (10, 10-1; 10-2) nach einem der vorhergehenden Ansprüche, wobei die Zinkelektrode (11) in einer jeweiligen oberen Zone mittels eines Harzes (16) versiegelt ist, wobei das Außenelement (14) als Behälter der permanenten Referenzelektrode (10, 10-1; 10-2) dient und an einem entsprechenden oberen Ende (17) über ein elektrisches Kabel (18) mit dem Kasten (C) verbunden ist, um mit Hilfe des in dem Kasten (C) aufgenommenen Voltmeters (V) die Messung des elektrischen Potentials der zu schützenden vergrabenen Metallstruktur (ST) zu ermöglichen.

8. Permanente Referenzelektrode (10, 10-1; 10-2) nach einem der vorhergehenden Ansprüche, **dadurch gekennzeichnet, dass** das jeweilige Außengehäuse oder Außenelement (14), das als Behälter dient, aus Kunststoff besteht.

9. Permanente Referenzelektrode (10, 10-1; 10-2) nach einem der Ansprüche 1 oder 3, wobei die Zinkelektrode (11) mit dem Kasten (C) über ein Kabel (18) vom monopolaren Typ verbunden ist, so dass mit Hilfe des in dem Kasten (C) aufgenommenen Voltmeters (V) das elektrische Potential der vergrabenen Metallstruktur (ST) gemessen werden kann.

10. System (S) für den kathodischen Schutz einer vergrabenen Metallstruktur (ST), das eine oder mehrere permanente Referenzelektroden (10) nach einem der vorhergehenden Ansprüche umfasst, wobei die eine oder die mehreren permanenten Referenzelektroden (10) in der Nähe der zu schützenden vergrabenen Metallstruktur (ST) vergraben sind, um die Messung und Überwachung des Potentials an verschiedenen Punkten und Zonen der zu schützenden vergrabenen Metallstruktur (ST) zu ermöglichen.

## Revendications

1. Électrode permanente de référence (10, 10-1), pour l'utilisation avec une boîte (C) logeant un voltmètre (V) destiné à mesurer le potentiel de structures métalliques (ST) enfouies à protéger, comprenant :
- une électrode en zinc (11), ayant une forme allongée ;
- un remplissage (12), avec une base en gypse, bentonite, fibres de cellulose, et eau, qui enferme dans son intérieur ladite électrode en zinc (11) ; et
- un casier externe (14) qui recouvre au plan externe l'électrode permanente de référence (10-1) et qui agit comme récipient de ses parties ;
l'électrode permanente de référence (10, 10-1) étant **caractérisée en ce que** ledit remplissage (12), enfermant dans son intérieur ladite électrode en zinc (11), comprend du chlorure de sodium afin d'empêcher la passivation du matériau zinc de l'électrode (11), et
**en ce que** l'électrode permanente de référence (10, 10-1) comprend en outre un corps de confinement (13) contenant le remplissage (12) et recouvert du casier externe (14),
ledit corps de confinement (13) étant fabriqué avec un mortier en ciment (13') constitué de 50 à 70 % en poids de sable, de 15 à 25 % en poids de béton, de 10 à 15 % en poids d'eau et de 1 à 5 % en poids de NaCl et le mortier en ciment (13') dudit corps de confinement (13) faisant preuve d'une zone qui est laissée découverte par le casier externe (14).

2. Électrode permanente de référence (10, 10-1) selon la revendication 1, comprenant en outre une membrane polymère (15), avec des caractéristiques d'échange d'ions, interposée, dans le remplissage (12), entre l'élément d'électrode en zinc (11) et le corps de confinement (13) dans un mortier en ciment (13').

3. Électrode permanente de référence (10, 10-2), pour l'utilisation avec une boîte (C) logeant un voltmètre (V) destiné à mesurer le potentiel de structures métalliques (ST) enfouies à protéger, comprenant :
- une électrode en zinc (11), ayant une forme allongée ;
- un remplissage (12), avec une base en gypse, bentonite, fibres de cellulose, et eau, qui enferme dans son intérieur ladite électrode en zinc (11) ; et
- un casier externe (14), qui recouvre au plan externe l'électrode permanente de référence (10-2), étant rempli avec ledit remplissage (12), et qui agit comme récipient des parties de l'électrode permanente de référence (10-2) ;
l'électrode permanente de référence (10, 10-2) **étant caractérisée en ce que** ledit remplissage (12), enfermant dans son intérieur ladite électrode en zinc (11), comprend également du chlorure de sodium et du chlorure de zinc afin d'empêcher la passivation du matériau zinc de l'électrode (11),
**en ce que** ledit casier externe (14) présente une forme tubulaire allongée qui s'étend autour et le long de ladite électrode en zinc et de la forme allongée respective ; et
**en ce que** l'électrode permanente de référence (10, 10-2) comprend en outre un déflecteur ou une membrane (19) poreux·euse qui ferme en-dessous l'électrode permanente de référence (10-2) dans une zone qui est laissée découverte par ledit casier externe (14) au niveau d'une extrémité ouverte de la forme tubulaire allongée respective,
ledit déflecteur ou ladite membrane (19) poreux·euse étant adapté·e pour coopérer, le long de toute son extension et sans l'interposition de quelconque élément additionnel, avec le sol (T) où l'électrode de référence (10, 10-2) est enfouie dans les proximités de la structure métallique (ST) à protéger, afin d'assurer la continuité électrolytique entre le sol (T) et ledit remplissage (12) qui remplit le casier externe (14).

4. Électrode permanente de référence (10, 10-2) selon la revendication 3, comprenant en outre une membrane polymère (21), ayant des caractéristiques d'échange d'ions, enchâssée dans le déflecteur (19) poreux ou interposée entre le déflecteur (19) poreux et le remplissage (12).

5. Électrode permanente de référence (10, 10-1 ; 10-2) selon la revendication 3 ou 4, ledit déflecteur (19) poreux étant constitué d'argilite.

6. Électrode permanente de référence (10, 10-1 ; 10-2) selon la revendication 1 ou l'une quelconque des revendications précédentes lorsqu'elle dépend de la revendication 1, le remplissage contenant une quantité de chlorure de zinc pour stabiliser le potentiel de l'électrode en zinc.

7. Électrode permanente de référence (10, 10-1 ; 10-2) selon l'une quelconque des revendications précédentes, ladite électrode en zinc (11) étant scellée dans une zone supérieure respective, à l'aide d'une résine (16), avec ledit élément externe (14) agissant comme récipient de l'électrode permanente de référence (10, 10-1 ; 10-2), et étant raccordée à une extrémité supérieure respective (17) à ladite boîte (C) à travers un câble électrique (18), afin de permettre la mesure, à l'aide du voltmètre (V) logé dans ladite boîte (C), du potentiel électrique de la structure métallique (ST), enfouie, à protéger.

8. Électrode permanente de référence (10, 10-1 ; 10-2) selon l'une quelconque des revendications précédentes, le casier ou l'élément (14) externe respectif, agissant comme récipient, étant en matière plastique.

9. Électrode permanente de référence (10, 10-1 ; 10-2) selon l'une quelconque des revendications 1 ou 3, ladite électrode en zinc (11) étant raccordée à ladite boîte (C) à travers un câble (18) du type monopolaire, afin de permettre de mesurer, à l'aide du voltmètre (V) logé dans la boîte (C), le potentiel électrique de la structure métallique (ST) enfouie.

10. Système (S) de protection cathodique d'une structure métallique (ST), enfouie, comprenant une ou plusieurs électrodes permanentes de référence (10) selon l'une quelconque des revendications précédentes, lesdites une ou plusieurs électrodes permanentes de référence (10) étant enfouies à proximité de la structure métallique (ST) enfouie à protéger, afin de permettre la mesure et la surveillance du potentiel à différents points et différentes zones de la structure métallique (ST) enfouie à protéger.
